# EUROPÄISCHE PATENTSCHRIFT

(11) **EP 1 440 615 B1**
(45) Veröffentlichungstag und Bekanntmachung des Hinweises auf die Patenterteilung: **20.08.2008**
(21) Anmeldenummer: 03030044.6
(22) Anmeldetag: 30.12.2003
(51) Int. Cl.: A01B 71/06, A01B 73/04

(54) **Landmaschine**
Agricultural machine
Machine agricole

(30) Priorität: 27.01.2003 DE 20301196 U
(43) Veröffentlichungstag der Anmeldung: 28.07.2004
(73) Patentinhaber: FELLA-Werke GmbH, 90533 Feucht (DE)
(72) Erfinder: Pürrer, Josef, 90537 Feucht (DE)
(74) Vertreter: Grünecker, Kinkeldey, Stockmair & Schwanhäusser Anwaltssozietät

(56) Entgegenhaltungen:
- EP-A- 0 369 308
- EP-A- 0 772 970
- EP-A- 1 051 901
- DE-A- 19 943 208

## Beschreibung

Die Erfindung bezieht sich auf eine Landmaschine der im Oberbegriff von Anspruch 1 erläuterten Art.

Bestimmte Landmaschinen, beispielsweise Heumaschinen oder Bodenbearbeitungsmaschinen, weisen eine Reihe von über die Arbeitsbreite verteilt angeordnete Arbeitswerkzeuge auf, die über einen gemeinsamen Antrieb von der Antriebseinrichtung der Landmaschine, also beispielsweise über eine Zapfwelle vom Schlepper, angetrieben werden. Für eine effektive Arbeit der Landmaschine ist jedoch die Arbeitsbreite, d.h. diejenige Breite quer zur Fahrtrichtung, die von den Arbeitswerkzeugen überstrichen wird, viel breiter als dies für einen Transport über öffentliche Straßen zugelassen ist. Aus diesem Grunde und auch für eine verbesserte Bodenanpassung werden die Arbeitswerkzeuge gewöhnlich durch mehrere Arbeitswellen angetrieben, die untereinander über Gelenke mit einer Gelenkachse zu einer einzigen Arbeitswelle verbunden werden. Auf diese Weise können die Antriebswellen, zusammen mit den zugeordneten Rahmenteilen, nach oben bzw. nach oben und innen verschwenkt werden, so dass die Breite der Landmaschine die zulässige Höchstbreite für den Verkehr auf öffentlichen Straßen nicht übersteigt. Zur Verbindung der Antriebswellen untereinander haben sich einfache Kreuzgelenke bewährt. Diese haben jedoch den Nachteil, dass sie nur in bestimmten Drehwinkelstellungen, bei denen eine Achse des Gelenkkreuzes parallel zur Gelenkachse des Rahmens liegt, abgewinkelt werden können. Normalerweise nehmen die Kreuzgelenke beim Abwinkeln diese Position selbsttätig ein. Befinden sich jedoch die Kreuzgelenke genau in der 45° Position (Totpunktlage) oder wird das selbstausrichtende Verdrehen der Antriebswellen durch noch in Eingriff befindliche Arbeitswerkzeuge behindert, kann es beim Betätigen der Schwenkvorrichtung zu Beschädigungen der Kreuzgelenke führen.

Eine Landmaschine der im Oberbegriff des unabhängigen Anspruchs berücksichtigten Art ist aus der DE-A-199 43 208 bekannt. Diese Druckschrift beschreibt eine Landmaschine mit Arbeitswerkzeugen, die über eine Antriebswelle antreibbar und um die Achse eines Gelenks verschwenkbar sind. Um zu verhindem, dass das Gelenk beim Verschwenken der Arbeitswerkzeuge beschädigt wird, ist eine Positioniereinrichtung zum Ausrichten der Gelenkachse in eine zum Abwinkeln geeignete Drehwinkelstellung vorgesehen, durch die die Antriebswelle in die geeignete Drehwinkelstellung verdreht werden kann.

Die Positioniereinrichtung enthält eine Sperrklinkenanordnung, die auf eine freilaufende Welle einwirkt. Die Sperrklinkenanordnung wirkt derart, dass sie ein Freilaufen dieser Welle beim Drehantrieb der Arbeitswerkzeuge über ihre Antriebswelle gestattet, in der Gegenrichtung jedoch die Antriebswelle der Arbeitswerkzeuge mit einem Stellzylinder verbindet, wobei der Stellantrieb dadurch in die Lage versetzt wird, die Antriebswellen der Arbeitswerkzeuge zu verdrehen.

Zu diesem Zweck enthält die Sperrklinkenanordnung einen ersten Ring, der auf der freilaufenden Welle sitzt und mit dieser beim Antrieb der Arbeitswerkzeuge verdreht wird, und einen koaxial um den ersten Ring angeordneten zweiten Ring, der mit dem Stellzylinder verbunden ist. Zwischen den beiden Ringen sind zwei federbelastete Sperrklinken und eine der Anzahl der möglichen zum Abwinkeln geeigneten Drehwinkelstellungen entsprechende Anzahl von Ausnehmungen vorgesehen. Die Sperrklinken sind gegen die Wirkung einer Feder in jeweils einer Ausnehmung im ersten Ring versenkbar, so dass sich die freilaufende Welle mit dem ersten Ring relativ zum zweiten Ring in einer ersten Drehrichtung frei drehen kann. In einer zweiten Drehrichtung können die Sperrklinken unter der Wirkung der Feder in die Ausnehmungen am zweiten Ring einschnappen, so dass sich erster und zweiter Ring gemeinsam verdrehen können. Die Lage der Ausnehmungen im zweiten Ring ist so auf die Ausfahrbewegung des Stellantriebs abgestimmt, dass sich die Ausnehmungen immer in einer zum Abwinkeln geeigneten Drehwinkelstellung befinden, wenn der Stellzylinder an seiner Endstellung angekommen ist.

Sollen die Arbeitswerkzeuge zusammen mit ihren Antriebswellen relativ zueinander verschwenkt werden, so wird zunächst der Antrieb der Antriebswellen stillgesetzt. Dann wird der Stellantrieb der Positioniereinrichtung bis zum definierten Endpunkt verfahren. Dabei wird der zweite Ring in einer Drehrichtung mitgenommen, die den Sperrklinken gestattet, sich in die nächstmögliche Ausnehmung im zweiten Ring hinein zu bewegen, wodurch eine drehfeste Kopplung zwischen den beiden Ringen und somit dem Stellzylinder und den Antriebswellen der Arbeitswerkzeuge bewirkt wird. Der Stellzylinder beendet dann seine Bewegung in die definierte Schwenkposition und nimmt dadurch die freilaufende Welle und über die freilaufende Welle auch die Antriebswellen der Arbeitswerkzeuge in die definierte Schwenkposition mit. Die bekannte Positioniereinrichtung nimmt die Verdrehung der Antriebswellen vor, wenn diese mit ihrem Antriebsaggregat, beispielsweise der Zapfwelle eines Schleppers, verbunden sind. Dies kann unter Umständen zur Beschädigung des Antriebs oder zur Beschädigung der Gelenke führen.

Die EP 772 970 beschreibt eine Heubwerbungsmaschine mit einer Mehrzahl von Arbeitswerkzeugen, die über eine geteilte Antriebswelle angetrieben und an einem mit einem Gelenk versehenen Rahmen so befestigt sind, dass sie in eine Transport- und eine Arbeitsstellung verschwenkt werden können. Die Antriebswellenteile greifen mit Positionierfingern ineinander, sind jedoch nicht mit einem Gelenk verbunden. Der Rahmen enthält ein Gelenk im Bereich der aneinander stoßenden Antriebswellen, das so ausgebildet, ist, dass sich die Antriebswellenteile voneinander wegbewegen, wenn der Rahmen um das Rahmengelenk verschwenkt wird. Sollten sich die Antriebswellenteile, beispielsweise durch Anstoßen an ein Arbeitswerkzeug, in der Transportstellung verdreht haben, so muss beim Rückschwenken in die Arbeitsstellung eines der beiden Arbeitswellenteile manuell verdreht werden, damit die beiden Arbeitswellenteile wieder ineinander greifen können.

Der Erfindung liegt somit die Aufgabe zugrunde, eine Landmaschine bereitzustellen, bei der auf konstruktiv einfache Weise die Gefahr einer Beschädigung der Gelenke beim Schwenken der Antriebswelle nicht gegeben ist.

Die Aufgabe wird durch die im Anspruch 1 angegebenen Merkmale gelöst.

Durch die erfindungsgemäße Ausgestaltung der Verdreheinrichtung können die Gelenkachsen vor oder beim Verschwenken der Antriebswellen in die Schwenkposition gebracht werden und die Antriebswellen vom Antrieb getrennt werden, so dass eine Beschädigung der Gelenke nicht zu befürchten ist.

Vorteilhafte Weiterbildungen der Erfindung sind den Unteransprüchen zu entnehmen.

Zweckmäßigerweise wird die Positioniereinrichtung durch die Schwenkeinrichtung betätigt.

Eine Ausführungsbeispiel der Erfindung wird nachfolgend anhand der Zeichnungen näher erläutert. Es zeigen:
- Fig. 1: eine schematische Darstellung einer erfindungsgemäß ausgebildeten Landmaschine,
- Fig. 2: eine schematische Darstellung der Arbeitswerkzeuge der Landmaschine nach Fig. 1,
- Fig. 3: eine vergrößerte Darstellung der Gelenkverbindung zwischen zwei Antriebswellen,
- Fig. 4: eine Gesamtdarstellung der erfindungsgemäßen Positioniereinrichtung,
- Fig. 5: ein Längsschnitt der Positioniereinrichtung nach Fig. 4, und
- Fig. 6: Einzelteile der Positioniereinrichtung nach Fig. 4 und 5.

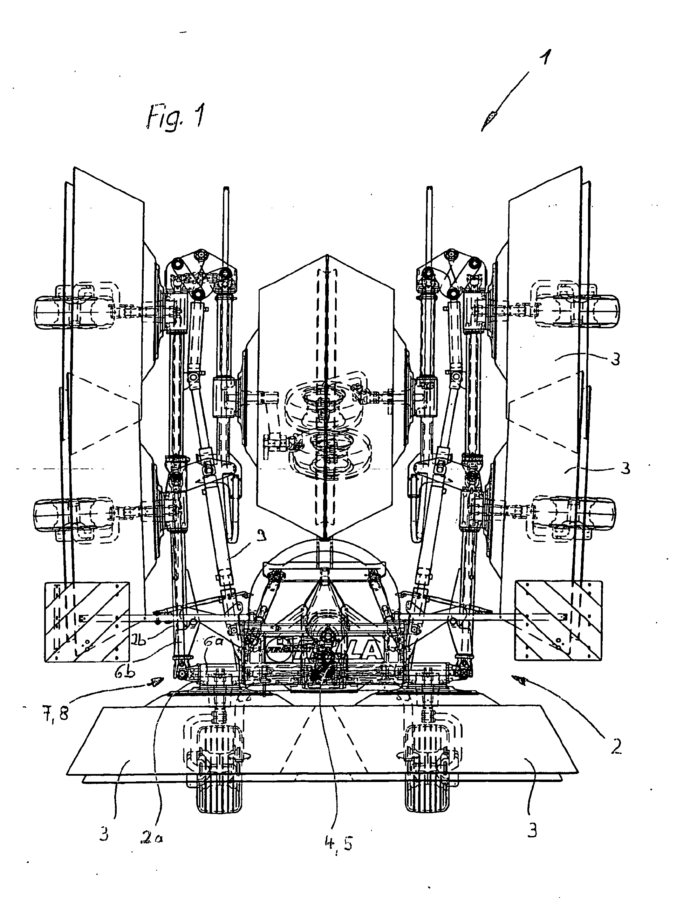

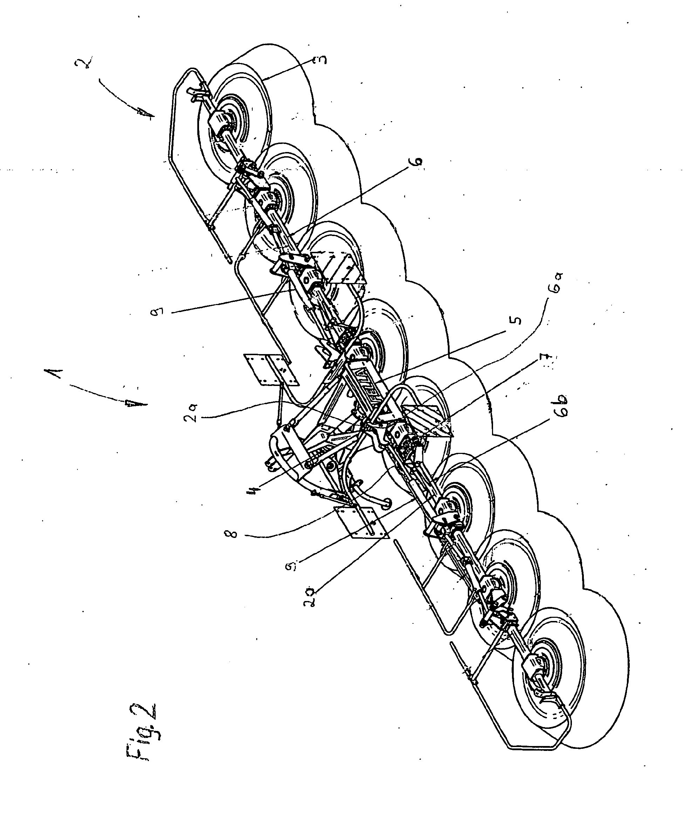

Die Fig. 1 und 2 zeigen in schematischer Darstellung eine Landmaschine 1, die als Bodenbearbeitungsgerät oder Heumaschine oder dgl. ausgebildet sein kann. Die Landmaschine 1 enthält einen insgesamt mit 2 bezeichneten Rahmen, an dem eine Vielzahl von Arbeitswerkzeugen 3 in Arbeitsbreite nebeneinander liegend angeordnet sind. Alle Arbeitswerkzeuge 3 werden über eine Antriebseinrichtung, von der hier lediglich die Zapfwelle 4 zur Verbindung mit einem Schlepper dargestellt ist, angetrieben. Von der Zapfwelle 4 wird über ein Getriebe, das in einem Getriebekasten 5 untergebracht ist, jedes einzelne der Arbeitswerkzeuge 3 über eine insgesamt mit 6 bezeichnete Antriebswelle angetrieben. Die Antriebswelle 6 ist an vorbestimmten Stellen geteilt, wobei jeweils eine erste Antriebswelle 6a und eine zweite Antriebswelle 6b über ein Gelenk 7 mit einer Gelenkachse 7a miteinander verbunden sind.

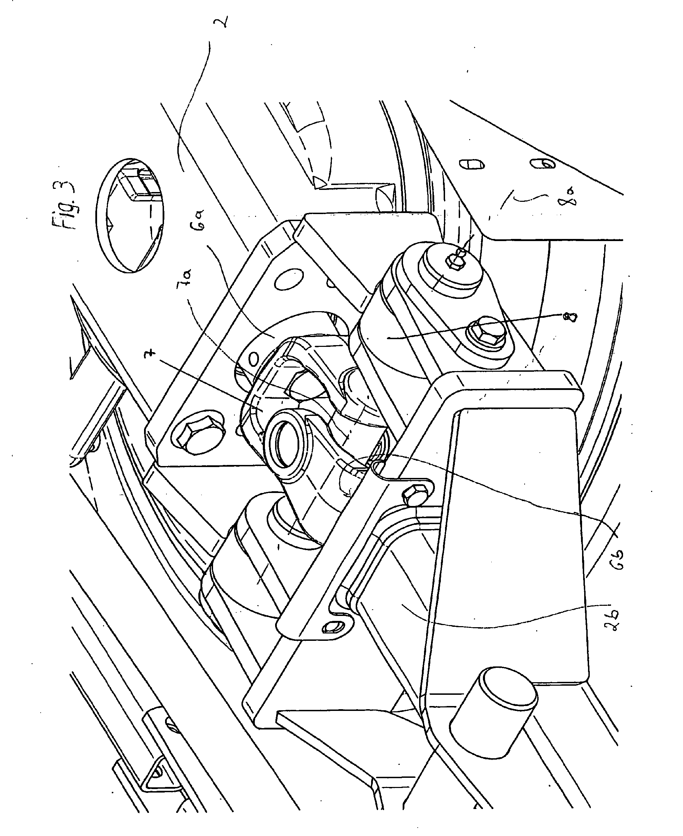

An der gleichen Stelle ist auch der Rahmen 2 in ein erstes Rahmenteil 2a und ein zweites Rahmenteil 2b (s. a. Fig. 3) getrennt, die ebenfalls über ein Gelenk 8 mit einer Schwenkachse 8a miteinander verbunden sind. Zum Verschwenken muss die Gelenkachse 7a mit der rahmenfesten Schwenkachse 8a, deren Lage bezüglich des Rahmens sich nicht ändert, fluchtend ausgerichtet sein.

Zum Verschwenken der einzelnen Rahmenteile 2a, 2b mit den zugehörigen Antriebswellen 6a, 6b relativ zueinander ist eine Schwenkeinrichtung 9 vorgesehen, die beispielsweise die in Fig. 2 dargestellten Hydrozylinder oder Stellmotoren enthalten kann, die hydraulisch oder pneumatisch oder dgl. betätigbar sein können. Die Schwenkeinrichtung 9 greift am Rahmen an und verschwenkt beispielsweise die beiden Rahmenteile 2a, 2b um die Schwenkachse 8a relativ zueinander, wobei die Antriebswellen 6a, 6b mitgenommen werden und sich um die Gelenkachse 7a, vorausgesetzt diese ist mit der Schwenkachse 8a fluchtend ausgerichtet, ebenfalls verschwenken.

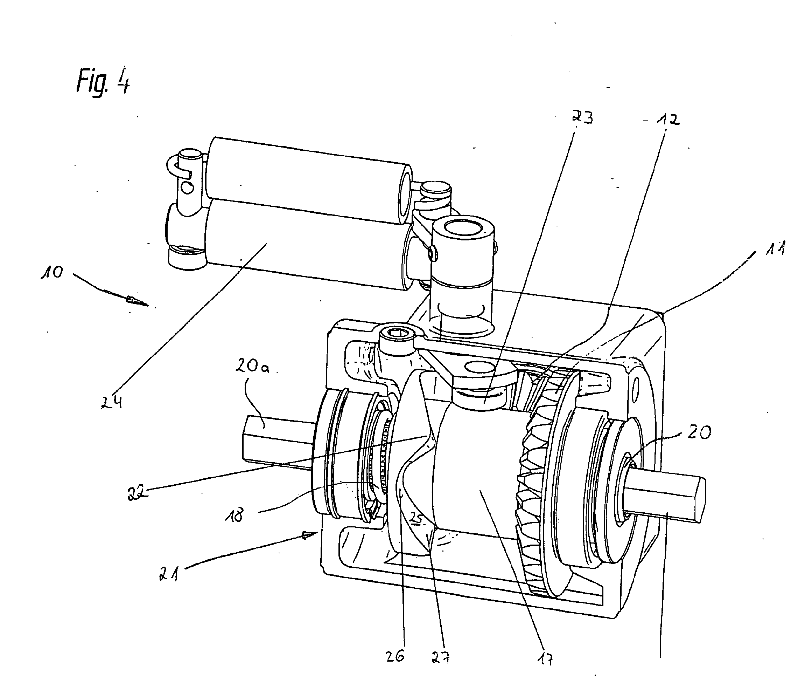

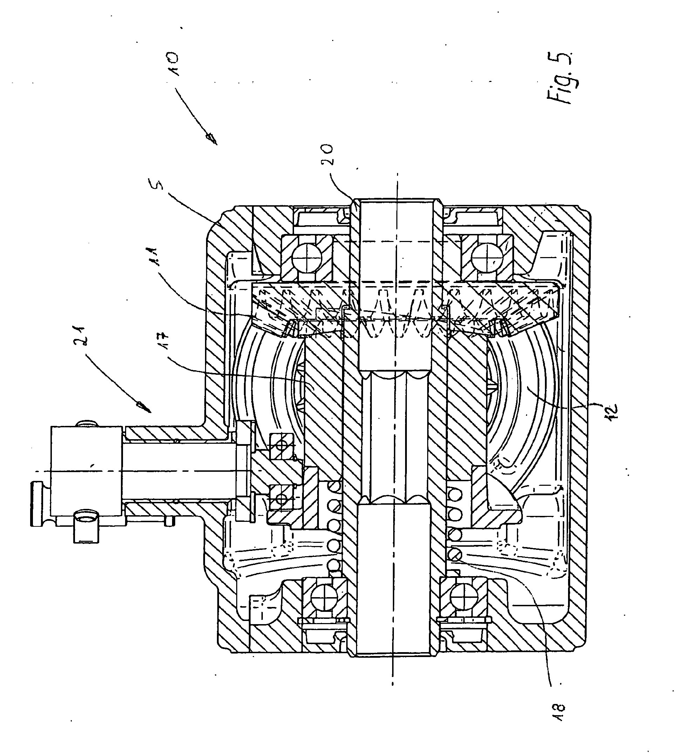

Um sicherzustellen, dass sich die Antriebswellen 6a, 6b beim Betätigen der Schwenkeinrichtung 9 in einer Position befinden, in der die Gelenkachse 7a mit der Schwenkachse 8a fluchtend ausgerichtet ist, ist eine in den Fig. 4 bis 6 näher dargestellte als gesondertes Bauteil ausgebildete und bevorzugt mechanisch wirkende Positioniereinrichtung 10 vorgesehen. Die Positioniereinrichtung 10 ist bevorzugt im Getriebekasten 5 untergebracht und enthält ein Tellerrad 11 als Teil eines von der Zapfwelle 4 angetriebenen Winkelgetriebes 12.

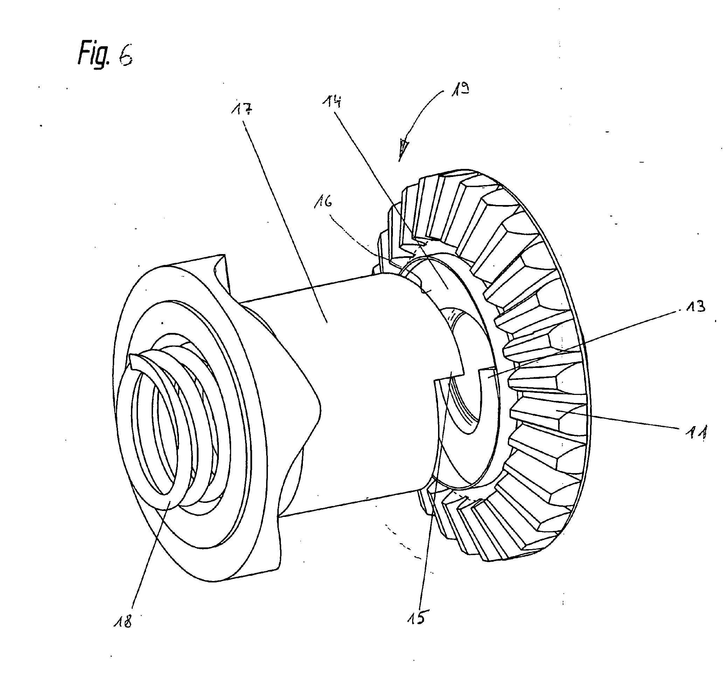

Wie insbesondere Fig. 6 zeigt, ist das Tellerrad 11 mit wenigstens einem, bevorzugt zwei, Mitnehmerzähnen 13 verbunden, die in Axialrichtung 'zur Drehrichtung des Tellerrades 11 ansteigende und plötzlich abfallende Rampen 14 bilden. Diese Mitnehmerzähne 13 und Rampen 14 stehen mit Mitnehmerzähnen 15 und Rampen 16 in Eingriff, die an der Stirnseite einer koaxial mit dem Tellerrad 11 ausgerichteten Schiebemuffe 17 angeordnet sind. Die Schiebemuffe 17 wird durch eine Feder 18 in Richtung auf das Tellerrad 11 belastet, so dass die in Eingriff miteinander gedrückten Mitnehmerzähne 13 und 15 eine Kupplung 19 bilden, durch die, in durch die Feder 18 eingerücktem Zustand, die Schiebemuffe 17 bei der Drehung des Tellerrades 11 in einer Richtung, die der Antriebsrichtung der Arbeitswerkzeuge 3 entspricht, mitgenommen wird. Die Schiebemuffe 17 ist auf einer Hohlwelle 20 drehfest aber axial zu ihr verschiebbar gelagert. In die Hohlwelle 20 ist eine als Teil der anliegenden Antriebswelle 6 ausgebildete Sechskantwelle 20a eingesteckt. Im Ausführungsbeispiel gemäß Fig. 1 ist dies die Antriebswelle 6a, die die beiden inneren Arbeitswerkzeuge 3 antreibt und bis zum Gelenk 7 durchläuft. Durch das hohe Schwungmoment der rotierenden Arbeitswerkzeuge entstehen bei Drehzahlreduzierung bzw. Abschalten des Antriebes Lastwechsel im Antriebssystem, welche zu erhöhter Beanspruchung aller Antriebsteile führen können. Um dies zu vermeiden, sind die Mitnehmerzähne so ausgebildet, dass sie nur in einer Richtung Kraft übertragen können. Drehen sich somit bei einem Lastwechsel das Tellerrad 11 und die Schiebemuffe 17 entgegen der Arbeitsrichtung relativ zueinander, wird die Schiebemuffe 17 gegen die Wirkung der Feder 18 über die in Eingriff stehenden Rampen 14, 16 axial zurückgedrückt und ein Freilauf der Arbeitswerkzeuge 3 erreicht.

Die Positioniereinrichtung 10 enthält weiterhin eine Verdreheinrichtung 21 in Form einer selbstausrichtenden Nockenanordnung, die dafür sorgt, dass sich die Gelenkachse 7a fluchtend mit der Schwenkachse 8a ausrichtet, wenn Rahmen und Antriebswelle verschwenkt werden sollen. Die Verdreheinrichtung 21 enthält einen Nocken 22 und einen Nockenfolger 23, der mit Hilfe eines Hydrozylinders oder Stellmotors 24 mit einer vorbestimmten Kraft gegen den Nocken 22 drückbar ist. Der Nockenfolger 23 ist als Laufrolle ausgebildet. Der Hydrozylinder oder Stellmotor 24 steht mit der Schwenkeinrichtung 9 in Wirkverbindung.

Der Nocken 22 enthält an der dem Nockenfolger 23 zugewandten Seite einen Laufweg 25 für den Nockenfolger 23, der über Nockentäler 26 und Nockenberge 27 führt. Als Nockentäler sind diejenigen Bereiche des Laufweges 25 definiert, die einen größeren Abstand vom Nockenfolger 23 aufweisen als die Nockenberge 27. Im dargestellten Ausführungsbeispiel bildet der Laufweg 25 eine geschlossene Umlaufbahn mit abwechselnd angeordneten Nockenbergen 27 und -tälern 26, wobei jedoch die zwischen zwei Nockentälern 26 angeordneten Berge 27 asymmetrisch ausgebildet sind, um zu verhindern, dass die Antriebswellen 6a, 6b in einer selbsthemmenden Stellung stehen bleiben, in der die Gelenkachse 7a einen Winkel von 45° zur Schwenkachse 8a bildet.

Der Nocken 22 ist drehfest mit der Antriebswelle 6a verbunden, so dass dann, wenn der Nockenfolger 23 durch den Motor 24 mit einer vorbestimmten Kraft gegen den Nocken 22 gedrückt wird, und der Nockenfolger 23 dabei nicht exakt in ein Nockental 26 trifft, der Nocken 22 zusammen mit der Antriebswelle 6 verdreht wird, bis der Nockenfolger 23 exakt in einem Tal 26 ruht. Bei einer zweckmäßigen Zuordnung der Täler 26 zur Gelenkachse 7a befindet sich diese dann in einer optimalen Ausrichtung zur Schwenkachse 8a.

Der Nocken 22 ist zweckmäßigerweise fest mit der Schiebemuffe 17 verbunden. Auf diese Weise kann beim Aufbringen einer axial zur Schiebemuffe 17 wirkenden Kraft vom Motor 24 über den Nockenfolger 23 auf den Nocken 22 die Kupplung 19 gegen die Kraft der Feder 18 ausgerückt werden. Auf diese Weise wird sichergestellt, dass das Verdrehen der Antriebswellen nicht beispielsweise durch eine Zapfwellenbremse oder dgl. gehemmt wird.

Der Motor 24 kann durch eine Betätigungseinrichtung für die Schwenkvorrichtung 9 und gleichzeitig mit dieser betätigt werden. Es ist jedoch auch möglich, die Positioniereinrichtung 10 über ein nicht gezeichnetes, mechanisches Verbindungsgestänge zu betätigen, welche mit mindestens einem sich bereits verschwenkenden Rahmenteil verbunden ist.

In Abwandlung des beschriebenen und gezeichneten Ausführungsbeispiels können Verdreheinrichtung oder Kupplungseinrichtung unabhängig voneinander vorgesehen und betätigt werden. Bei den üblichen, symmetrisch beidseitig eines Antriebs angeordneten Arbeitswerkzeugen sind zweckmäßigerweise für jede Seite der Zapfwelle jeweils eine Positioniereinrichtung vorgesehen. Wenn die Schwenkeinrichtung hydraulisch betätigt wird, so wird zweckmäßigerweise auch die Positioniereinrichtung hydraulisch betätigt.

Schließlich kann die erfindungsgemäße Positioniereinrichtung auch mit einer Nockeneinrichtung mit nur einem Tal und einem Berg vorgesehen sein.

## Patentansprüche

1. Landmaschine (1), mit einem Rahmen (2) mit einem ersten und einem zweiten Rahmenteil (2a, 2b), die über ein Gelenk (8) mit einer Gelenkachse (8a), insbesondere ein Kreuzgelenk, miteinander verbunden sind, am Rahmen (2) angeordneten Arbeitswerkzeugen (3), die von einer Antriebseinrichtung (4) über eine Antriebswelle (6) mit wenigstens einem ersten und einem zweiten Antriebswellenteil (6a, 6b) antreibbar sind, wobei die Antriebswellenteile (6a, 6b) über ein Gelenk (7) mit einer Gelenkachse (7a) miteinander verbunden sind, einer Schwenkeinrichtung (9) zum Verschwenken des zweiten Rahmenteils (2b) und des zweiten Antriebswellenteils (6b) relativ zum ersten Rahmenteil (2a) und dem ersten Antriebswellenteil (6a) und einer Positioniereinrichtung (10) mit einer Verdreheinrichtung (21) zum Ausrichten der Gelenkachse (7a) in eine zum Abwinkeln geeignete Drehwinkelstellung, in der die Gelenk- und Rahmenachse (7a, 8a) fluchtend miteinander ausgerichtet sind, **dadurch gekennzeichnet, dass** die Positioniereinrichtung (10) eine mit der Verdreheinrichtung (21) kombinierte Kupplung (19) zum Unterbrechen des Antriebs durch Abkoppeln der Antriebswelle (6) von der Antriebseinrichtung (4) beim Ausrichten der Gelenkachse (7a) in die zum Abwinkeln geeignete Drehwinkelstellung aufweist.

2. Landmaschine nach Anspruch 1, **dadurch gekennzeichnet, dass** die Verdreheinrichtung (10) eine Nockenanordnung aufweist.

3. Landmaschine nach Anspruch 1, **dadurch gekennzeichnet, dass** die Verdreheinrichtung (21) eine selbstausrichtende Nockenanordnung aufweist.

4. Landmaschine nach Anspruch 2 oder 3, **dadurch gekennzeichnet, dass** die Nockenanordnung einen Nockenfolger (23) sowie wenigstens einen Nockenberg (27) und ein Nockental (26) aufweist, die durch einen Laufweg (25) für den Nockenfolger (23) miteinander verbunden sind.

5. Landmaschine nach einem der Ansprüche 2 bis 4, **dadurch gekennzeichnet, dass** die Nockenanordnung derart gestaltet ist, dass für jede der zum Abwinkeln geeigneten Drehwinkelstellung der Antriebswellen (6a, 6b) ein Nockental (26) vorgesehen ist.

6. Landmaschine nach Anspruch 4 oder 5, **dadurch gekennzeichnet, dass** die Nockenberge (27) asymmetrisch zwischen den Nockentälern (26) angeordnet sind.

7. Landmaschine nach einem der Ansprüche 2 bis 6, **dadurch gekennzeichnet, dass** die Nockenanordnung einen Nocken (22) mit wenigstens einem die Schwenkposition definierenden Nockental (26) und wenigsten einem Nockenberg (27) aufweist, die über einen Laufweg (25) für einen Nockenfolger (23) miteinander verbunden sind, wobei der Nockenfolger (23) oder der Nocken (22) drehfest mit einer der Antriebswellen (6a) verbunden und relativ zueinander derart belastbar sind, dass der Nockenfolger (23) unter Verdrehung der Antriebswelle (6a) in das Nockental (26) gelangt.

8. Landmaschine nach einem der Ansprüche 1 bis 7, **dadurch gekennzeichnet, dass** die Kupplung (19) eine Schiebemuffe (17) enthält, die drehfest und axial verschiebbar mit einer der Antriebswellen (6a) verbunden und mit der Antriebseinrichtung (4, 11) in und außer Eingriff bringbar ist.

9. Landmaschine nach Anspruch 8, **dadurch gekennzeichnet, dass** die Schiebemuffe (17) in den Eingriff mit der Antriebseinrichtung (4, 11) belastet ist.

10. Landmaschine nach einem der Ansprüche 1 bis 9, **dadurch gekennzeichnet, dass** die Kupplung (19) in einer Richtung drehmomentübertragend und in der anderen Richtung als Freilauf wirkt.

11. Landmaschine nach einem der Ansprüche 1 bis 10, **dadurch gekennzeichnet, dass** die Positioniereinrichtung (10) eine Kupplung (19) mit einer drehfest und axial verschiebbar mit einer der Antriebswellen (6a) verbundene Schiebemuffe (17), die durch Federwirkung in einem Eingriff mit der Antriebseinrichtung (4, 11) belastet ist, sowie eine Verdreheinrichtung (21) enthält, die einen mit der Schiebemuffe (17) wirkungsverbundenen Nocken (22) und einen Nockenfolger (23) aufweist, der mit einer die Federwirkung aufhebenden Kraft derart beaufschlagbar ist, dass die Schiebemuffe (17) relativ zur Antriebswelle (6a) außer Eingriff mit der Antriebseinrichtung (4, 11) gelangt und zusammen mit der Antriebswelle (6a) verdrehbar ist.

12. Landmaschine nach einem der Ansprüche 1 bis 11, **dadurch gekennzeichnet, dass** die Positioniereinrichtung (10) durch die Schwenkeinrichtung (9) betätigbar ist.

13. Landmaschine nach einem der Ansprüche 1 bis 12, **dadurch gekennzeichnet, dass** die Betätigung der Positioniereinrichtung (10) durch einen Stellmotor oder Hydrozylinder (24) erfolgt, der mit den Hydrozylindern der Schwenkeinrichtung (9) für die Rahmenteile (2a, 2b) in Wirkverbindung steht.

## Claims

1. Agricultural machine (1), with a frame (2) comprising a first and a second fame part (2a, 2b) which are connected to one another by means of a joint with a joint shaft (8a), in particular a universal joint, work tools (3) disposed on the frame (2) which can be driven by a drive system (4) via a drive shaft (6) with at least a first and a second drive shaft part (6a, 6b), which drive shaft parts (6a, 6b) are connected to one another via a joint (7) with a joint shaft (7a), a pivot mechanism (9) for pivoting the second frame part (2b) and the second drive shaft part (6b) relative to the first frame part (2a) and the first drive shaft part (6a), and a positioning mechanism (10) with a turning mechanism (21) for orienting the joint axis (7a) in an appropriate position of angular rotation for pivoting purposes in which the joint and frame shaft (7a, 8a) are oriented in alignment with one another,
**characterised in that** the positioning mechanism (10) has a coupling (19) combined with the turning mechanism (21) for interrupting the driving operation by uncoupling the drive shaft (6) from the drive system (4) as the joint shaft (7a) is being oriented into the appropriate position of angular rotation for pivoting purposes.

2. Agricultural machine as claimed in claim 1,
**characterised in that** the turning unit (10) has a cam arrangement.

3. Agricultural machine as claimed in claim 1,
**characterised in that** the turning unit (21) has a self-orienting cam arrangement.

4. Agricultural machine as claimed in claim 2 or 3,**characterised in that** the cam arrangement has a cam follower (23) and at least one cam peak (27) and a cam valley (26) which are connected to one another across a travel path (25) for the cam follower (23).

5. Agricultural machine as claimed in one of claims 2 to 4, **characterised in that** the cam arrangement is designed so that a cam valley (26) is provided for each appropriate position of angular rotation of the drive shafts(6a, 6b) for pivoting purposes.

6. Agricultural machine as claimed in claim 4 or 5,
**characterised in that** the cam peaks (27) are disposed symmetrically between the cam valleys (26).

7. Agricultural machine as claimed in one of claims 2 to 6, **characterised in that** the cam arrangement has a cam (22) with at least one cam valley (26) defining the pivot position and at least one cam peak (27), which are connected to one another across a displacement path (25) for a cam follower (23), and the cam follower (23) or the cam (22) is connected to one of the drive shafts (6a) so as to rotate in unison with it and can be subjected to load relative to one another so that the cam follower (23) moves into the cam valley (26) as the drive shaft (6a) is turned.

8. Agricultural machine as claimed in one of claims 1 to 7, **characterised in that** the coupling (19) comprises a sliding sleeve (17) which is connected to one of the drive shafts (6a) so that it can rotate in unison with it and be axially displaced and can be moved into and out of engagement with the drive system (4, 11).

9. Agricultural machine as claimed in claim 8,
**characterised in that** the sliding sleeve (17) is subjected to load when engaged with the drive system (4, 11).

10. Agricultural machine as claimed in one of claims 1 to 9, **characterised in that** the coupling (19) acts in a torque-transmitting function in one direction and as a freewheel in the other direction.

11. Agricultural machine as claimed in one of claims 1 to 10, **characterised in that** the positioning mechanism (10) comprises a coupling (19) with a sliding sleeve (17) connected to one of the drive shafts (6a) so that it rotates in unison with it and can be axially displaced, to which load is applied by spring action in engagement with the drive system (4, 11) as well as a turning unit (21) which has a cam (22) actively connected to the sliding sleeve (17) and a cam follower (23) to which a force removing the spring action can be applied so that the sliding sleeve (17) can be moved relative to the drive shaft (6a) out of engagement with the drive system (4, 11) and turned together with the drive shaft (6a).

12. Agricultural machine as claimed in one of claims 1 to 11, **characterised in that** the positioning mechanism (10) can be operated by the pivot mechanism (9).

13. Agricultural machine as claimed in one of claims 1 to 12, **characterised in that** the positioning mechanism (10) is operated by an actuator motor or hydraulic cylinder (24), which is actively connected to the hydraulic cylinders of the pivot mechanism (9) for the frame parts (2a, 2b).

## Revendications

1. Machine agricole (1) comportant un châssis (2) avec un premier et un deuxième élément de châssis (2a, 2b), qui sont reliés l'un à l'autre par le biais d'une articulation (8) avec un axe d'articulation (8a), en particulier un joint de cardan, des outils de travail (3) disposés au niveau du châssis (2), qui peuvent être entraînés par un dispositif d'entraînement (4) par le biais d'un arbre d'entraînement (6) avec au moins un premier et un deuxième élément d'arbre d'entraînement (6a, 6b), les éléments d'arbre d'entraînement (6a, 6b) étant reliés les uns aux autres par le biais d'une articulation (7) avec un axe d'articulation (7a), un dispositif de pivotement (9) permettant de faire pivoter le deuxième élément de châssis (2b) et le deuxième élément d'arbre d'entraînement (6b) par rapport au premier élément de châssis (2a) et au premier élément d'arbre d'entraînement (6a) et un dispositif de positionnement (10) avec un dispositif de rotation (21) pour orienter l'axe d'articulation (7a) dans une position d'angle de rotation convenant au pliage, dans laquelle l'axe d'articulation et l'axe de châssis (7a, 8a) sont alignés l'un avec l'autre, **caractérisée en ce que** le dispositif de positionnement (10) présente un accouplement (19) combiné avec le dispositif de rotation (21) pour interrompre l'entraînement par découplage de l'arbre d'entraînement (6) du dispositif d'entraînement (4) lors de l'orientation de l'axe d'articulation (7a) dans la position d'angle de rotation convenant au pliage.

2. Machine agricole selon la revendication 1, **caractérisée en ce que** le dispositif de rotation (10) présente un agencement de cames.

3. Machine agricole selon la revendication 1, **caractérisée en ce que** le dispositif de rotation (21) présente un agencement de cames à alignement automatique.

4. Machine agricole selon la revendication 2 ou 3, **caractérisée en ce que** l'agencement de cames présente un suiveur de came (23) ainsi qu'au moins un sommet de came (27) et un creux de came (26), qui sont reliés ensemble par un parcours (25) pour le suiveur de came (23).

5. Machine agricole selon l'une quelconque des revendications 2 à 4, **caractérisée en ce que** l'agencement de cames est réalisé de sorte qu'un creux de came (26) est prévu pour chacune des positions d'angle de rotation convenant au pliage des arbres d'entraînement (6a, 6b).

6. Machine agricole selon la revendication 4 ou 5, **caractérisée en ce que** les sommets de came (27) sont agencés de manière asymétrique entre les creux de came (26).

7. Machine agricole selon l'une quelconque des revendications 2 à 6, **caractérisée en ce que** l'agencement de cames présente une came (22) avec au moins un creux de came (26) définissant la position de pivotement et au moins un sommet de came (27), qui sont reliés l'un à l'autre par le biais d'un parcours (25) pour un suiveur de came (23), le suiveur de came (23) ou la came (22) étant reliés de manière solidaire en rotation avec un des arbres d'entraînement (6a) et pouvant être sollicités les uns par rapport aux autres de sorte que le suiveur de came (23) arrive par rotation de l'arbre d'entraînement (6a) dans le creux de came (26).

8. Machine agricole selon l'une quelconque des revendications 1 à 7, **caractérisée en ce que** l'accouplement (19) contient un manchon coulissant (17), qui est relié de manière solidaire en rotation et de manière axialement mobile à un des arbres d'entraînement (6a) et peut être amené en et hors prise avec le dispositif d'entraînement (4, 11).

9. Machine agricole selon la revendication 8, **caractérisée en ce que** le manchon coulissant (17) est sollicité en prise avec le dispositif d'entraînement (4, 11) .

10. Machine agricole selon l'une quelconque des revendications 1 à 9, **caractérisée en ce que** l'accouplement (19) agit dans un sens de façon à transmettre un couple et dans l'autre sens comme roue libre.

11. Machine agricole selon l'une quelconque des revendications 1 à 10, **caractérisée en ce que** le dispositif de positionnement (10) contient un accouplement (19) avec un manchon coulissant (17) relié de manière solidaire en rotation et de manière axialement mobile à un des arbres d'entraînement (6a), qui est chargé par effet ressort en prise avec le dispositif d'entraînement (4, 11), ainsi qu'un dispositif de rotation (21), qui présente une came (22) à liaison active avec le manchon coulissant (17) et un suiveur de came (23) qui peut être sollicité par une force supprimant l'effet ressort de sorte que le manchon coulissant (17) arrive par rapport à l'arbre d'entraînement (6a) hors prise avec le dispositif d'entraînement (4, 11) et peut tourner conjointement avec l'arbre d'entraînement (6a).

12. Machine agricole selon l'une quelconque des revendications 1 à 11, **caractérisée en ce que** le dispositif de positionnement (10) peut être actionné par le dispositif de pivotement (9).

13. Machine agricole selon l'une quelconque des revendications 1 à 12, **caractérisée en ce que** l'actionnement du dispositif de positionnement (10) se fait par un servomoteur ou un cylindre hydraulique (24), qui est en relation active avec les cylindres hydrauliques du dispositif de pivotement (9) pour les éléments de châssis (2a, 2b).
